(19) **Europäisches Patentamt**

**European Patent Office**

**Office européen des brevets**

(11) **EP 1 522 384 B1**

(12) **FASCICULE DE BREVET EUROPEEN**

(45) Date de publication et mention
de la délivrance du brevet:
**13.12.2006 Bulletin 2006/50**

(51) Int Cl.:
*B23Q 17/09* (2006.01)          *G05B 19/4065* (2006.01)
*G01L 5/00* (2006.01)

(21) Numéro de dépôt: **03405715.8**

(22) Date de dépôt: **07.10.2003**

(54) **Dispositif de surveillance de l'usinage d'une pièce à partir de la mesure des forces de coupe**

Vorrichtung zur Überwachung der Bearbeitung eines Werkstücks durch Messung der Schneidkräfte

Device for controlling the machining of a workpiece, based on the measurement of cutting forces

(84) Etats contractants désignés:
**AT BE BG CH CY CZ DE DK EE ES FI FR GB GR HU IE IT LI LU MC NL PT RO SE SI SK TR**

(43) Date de publication de la demande:
**13.04.2005 Bulletin 2005/15**

(73) Titulaire: **Haute Ecole Arc**
**2000 Neuchâtel (CH)**

(72) Inventeur: **Zaquini, Leonello**
**2400 Le Locle (CH)**

(74) Mandataire: **GLN**
**Rue du Puits-Godet 8a**
**2000 Neuchâtel (CH)**

(56) Documents cités:
**DE-A- 4 218 799          DE-A- 10 154 435**
**DE-A- 19 632 148          US-A- 4 802 095**

**Description**

La présente invention se rapporte aux techniques de surveillance de la coupe des métaux ou autres matériaux durs. Elle concerne, plus particulièrement, un dispositif destiné, notamment, à la mesure des forces subies par un outil de coupe principalement destiné à des travaux de tournage, de perçage ou de fraisage.

Les fabricants et utilisateurs d'outils de coupe, ainsi que les spécialistes des revêtements anti-usure, sont quotidiennement confrontés aux deux problèmes suivants :

- le choix des géométries optimales des outils, et
- le choix des paramètre optimaux de la coupe.

A l'heure actuelle, ces deux choix nécessitent des essais très empiriques et des tests d'usure qui sont longs et coûteux. En effet, les machines et spécialistes mobilisés pour de tels travaux le sont pour de longues périodes. De plus, la quantité de matière et le nombre d'outils nécessaires sont souvent importants.

Certes, les professionnels ont à disposition la méthode, dite du couple outil-matière COM (Standard AFNOR NF E 66-520) et l'exécution de plans d'expérience. La première est relativement simple et rapide mais donne des résultats incertains, alors que la deuxième exige un nombre très élevé de longs essais.

Afin d'apporter une solution satisfaisante à ces problèmes, il s'agit de mieux comprendre les phénomènes liés à la coupe. Pour ce faire, il est utile, entre autres, de pouvoir surveiller et analyser les forces de coupe, les vibrations et la température des outils.

Le document DE-42 18 799-A décrit un dispositif de détection de l'usure d'un outil à partir de la mesure des forces agissant sur l'outil.

La présente invention a pour but de fournir un dispositif permettant de mesurer le premier des paramètres mentionnés ci-dessus, à savoir les forces subies par l'outil de coupe.

De façon plus précise, la présente invention concerne un dispositif de surveillance de l'usinage d'une pièce effectué par l'outil d'une machine, doté d'au moins une arête de coupe, caractérisé en ce qu'il comprend :

- une table dynamométrique sur laquelle est posée la pièce et fournissant une mesure des forces subies par l'outil, et
- des moyens pour calculer, à partir des forces ainsi mesurées et de paramètres relatifs à la géométrie de l'outil, la force de frottement et la force de cisaillement subies par l'outil.

Selon un mode de réalisation préféré, le dispositif calcule, en plus, des vitesses de frottement et de cisaillement, ainsi que la puissance de frottement et la puissance de cisaillement dissipées. Les résultats de ces calculs sont affichés en fonction du temps.

D'autres caractéristiques de l'invention apparaîtront plus clairement à la lecture de la description qui suit, faite en regard du dessin annexé dans lequel :

- la figure 1 est une vue de côté qui illustre schématiquement les différentes forces subies par l'arête de coupe d'un outil,
- la figure 2 est un schéma de principe du dispositif selon l'invention, et
- la figure 3 montre, un détail du dispositif, plus particulièrement utilisé pour surveiller une opération de fraisage, permettant de synchroniser la mesure des forces et la position de l'outil.

La puissance totale fournie par une machine-outil est connue. Selon la théorie de la "dynamique de la formation du copeau" de Merchant (études de Kienzle, Kronenberg, Feng et Menq), la puissance fournie se dissipe, d'une part, en puissance de cisaillement consommée lors de la formation du copeau et, d'autre part, en puissance de frottement consommée lors du dégagement du frottement le long de l'outil.

Pour maîtriser les conditions de coupe, il est particulièrement intéressant de connaître les valeurs des puissances de cisaillement et de frottement, mais elles ne sont pas directement accessibles. Pour contourner ce problème, elles sont déterminées par le biais de la force et de la vitesse qui les engendrent. Ainsi, la puissance de cisaillement est le produit d'une force de cisaillement par une vitesse de cisaillement et la puissance de frottement est le produit d'une force de frottement par une vitesse de frottement. La difficulté consiste donc à déterminer ces valeurs et la description qui suit, explique la démarche suivie pour y parvenir conformément à l'invention.

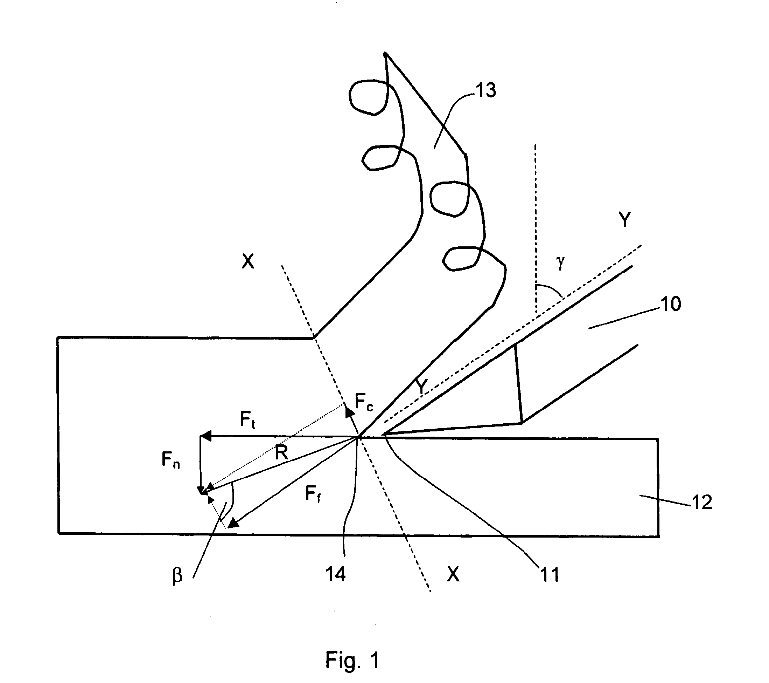

Se référant à une situation simple dans laquelle ni la pièce à usiner, ni l'outil de coupe ne sont en rotation, on examinera les forces présentes lors d'une opération d'usinage. Comme illustré sur la figure 1, c'est, par exemple, le cas d'une machine-outil, non représentée, qui entraîne un rabot 10 dont on a représenté l'arête de coupe 11 et d'une pièce 12 dont la matière est enlevée en formant un copeau 13 qui s'élimine le long d'un axe de dégagement YY.

On se place dans un repère centré sur l'outil, connu sous le nom de BSS pour Basic Stationary System. De manière évidente, on comprend que l'arête de coupe 11 exerce une force $F_n$ normale au plan de coupe défini par la surface usinée et dirigée vers le bas. C'est grâce à $F_n$ que l'arête est appliquée contre la pièce 12. L'arête de coupe 11 exerce également une force $F_t$ inscrite dans le plan de coupe et dirigée dans le sens du déplacement de l'arête par rapport à la pièce 12. C'est grâce à $F_t$ que l'arête avance dans la pièce.

Globalement, l'arête de coupe 11 exerce sur la pièce 12 une force résultante R.

La résultante R est décomposée en la somme d'une force de frottement $F_f$ et d'une autre force $F_g$ normale à $F_f$. Cette dernière représente les frottements du copeau sur l'outil et est orientée vers le bas, dans le prolongement d'un axe YY connu sous le nom d'axe de dégagement.

L'angle défini par R et $F_g$ est appelé angle de frottement β. Sa variation permet d'évaluer l'importance des frottements du copeau sur l'outil (plus β est faible, plus les frottements sont réduits) et, par exemple, de comparer l'efficacité de différents liquides d'arrosage. On ne connaît pas β mais on pourra, par exemple, le calculer, lorsque $F_f$ sera connue, à l'aide de la relation :

$$F_f = R \sin\beta.$$

Lors de la formation du copeau, celui-ci se plie, avant de s'éloigner de la surface de coupe, selon un axe de cisaillement XX qui relie le point d'attaque de l'arête de coupe 11 et le point où se plie la surface supérieure de la pièce 12, appelé point de pliure 14. A l'instar des frottements, ce phénomène de cisaillement est représenté par une force de cisaillement $F_c$. Ainsi, la résultante R est décomposée une deuxième fois en une force $F_c$, orientée vers le haut selon l'axe XX, et une force $F_d$ normale à $F_c$.

Par ailleurs, il est connu de définir :

- l'angle de coupe γ qui est l'angle d'attaque de l'outil par rapport à la verticale,
- l'épaisseur du copeau indéformé h0,
- l'épaisseur du copeau h1, et
- l'angle de cisaillement Φ déterminé par l'axe XX et l'horizontale.

γ est un paramètre de coupe connu, h0 et h1 peuvent être mesurés directement et Φ est calculé à l'aide de la relation :

$$\tan \Phi = \frac{\cos \gamma}{\left( \frac{1}{r} - \sin \gamma \right)}$$

dans laquelle r=h0/h1.

Concrètement, la résultante R est déterminée, à partir de la mesure des forces $F_t$ et $F_n$, en utilisant les relations trigonométriques habituelles. Les forces $F_f$ et $F_c$ sont ensuite calculées à partir de R.

De la même manière que celle qui vient d'être décrite, la vitesse de coupe V, qui définit l'avancée de l'arête de coupe 11 de l'outil dans la pièce 12. peut être décomposée selon l'axe de cisaillement XX et selon l'axe de dégagement YY pour obtenir, respectivement, la vitesse de frottement $V_f$ et la vitesse de cisaillement $V_c$. Comme on connaît la vitesse de coupe, fixée par l'opérateur de la machine, on peut donc aisément calculer $V_f$ et $V_c$.

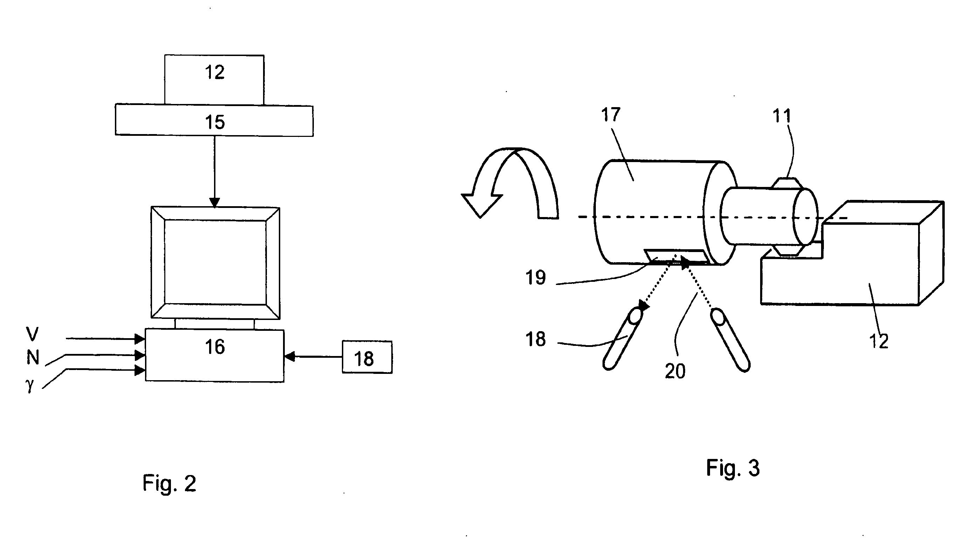

Dans la pratique, il est nécessaire, pour réaliser les calculs ci-dessus, de mesurer les forces $F_n$ et $F_t$. A cet effet, le dispositif selon l'invention, représenté à la figure 2, comporte essentiellement une table dynamométrique 15 sur laquelle est disposée la pièce à usiner 12, et qui fournit les mesures de $F_n$ et $F_t$ dans un repère normé basé sur la machine-outil, appelé RM (repère machine). Ces mesures sont appliquées à un ordinateur 16.

Selon l'invention, cet ordinateur 16 est équipé d'un logiciel programmé pour effectuer les opérations suivantes :

- acquisition manuelle de la géométrie de l'outil (angle de coupe γ),
- acquisition manuelle des paramètres d'usinage (vitesse de coupe V),
- acquisition des mesures des forces $F_n$ et $F_t$ fournies, en fonction du temps, par la table dynamométrique 15 dans le repère RM centré sur la machine,
- calcul de la résultante $R_{RM}$ à partir des mesures de $F_n$ et $F_t$,
- passage de $R_{RM}$ à $R_{BSS}$, par des calculs matriciels, du repère RM à un repère BSS centré sur l'outil,
- détermination de l'angle de cisaillement Φ,
- calcul, à partir de la résultante $R_{BSS}$, des forces de frottement $F_f$ et de cisaillement $F_c$,
- calcul, à partir de la vitesse de coupe V, des vitesses de frottement $V_f$ et de cisaillement $V_c$,
- calcul, à partir de $F_f$ et de $V_f$, de la puissance de frottement $P_f$ et, à partir de $F_c$ et $V_c$, de la puissance de cisaillement $P_c$ et, éventuellement, de la puissance totale,
- calcul de l'angle de frottement β par la formule $F_f = R \sin\beta$, et
- affichage des résultats de ces calculs en fonction du temps.

Même si tout est relativement simple dans le cas illustré sur la figure 1, il devient beaucoup plus difficile d'effectuer les mêmes calculs pour le cas d'une opération de fraisage telle qu'illustrée sur la figure 3, dans laquelle l'outil est entraîné en rotation par une broche 17 et comporte parfois plusieurs arêtes de coupe, engagées en même temps dans la pièce 12.

Il existe alors deux difficultés particulières dont il faut tenir compte. Premièrement, la rotation de l'outil entraîne forcément des fluctuations importantes des forces et de l'angle β définis ci-dessus. Deuxièmement, même pour deux arêtes de coupe d'un outil neuf, dans des positions équivalentes, l'expérience montre que la répartition des forces n'est pas identique.

On ne peut donc pas se satisfaire de l'affichage, d'une part, de la répartition des puissances de cisaillement et de frottement et, d'autre part, de l'angle de cisaillement en fonction du temps dans un repère basé sur la machine, car ces valeurs ne sont pas comparables d'une arête de coupe à l'autre. Il est donc nécessaire de les corréler avec la position de chaque arête.

Pour connaître, à tout moment, la position de chaque arête, on utilise, par exemple, un capteur optique 18 relié à l'ordinateur 16 et capable de reconnaître un signe placé sur la broche 17. Comme illustré sur la figure 3, celle-ci porte une tache de couleur 19, alignée avec une arête de coupe 11 de l'outil. Un faisceau de lumière 20 est dirigé sur la broche 17 de manière à éclairer la tache 19 lorsque l'arête de coupe à laquelle elle est couplée pénètre dans la pièce 12.

Lorsqu'elle est éclairée par le faisceau 20, la tache 19 absorbe une partie du spectre de la lumière et la partie réfléchie est ensuite perçue par le capteur 18 placé sur son trajet. A chaque fois qu'il perçoit le faisceau, le capteur transmet à l'ordinateur 16 une information selon laquelle l'arête de coupe repérée par la surface 19 entre au contact de la pièce 12.

Connaissant la vitesse de rotation de l'outil et sa géométrie, notamment le nombre d'arêtes de coupe, l'ordinateur peut facilement calculer la position de chacune d'elle à tout moment.

La détermination des forces de frottement et de cisaillement reprend la méthode décrite ci-dessus. Mais il faut alors tenir compte du fait que plusieurs arêtes de coupe sont plus ou moins engagées à un instant donné.

Pour accomplir le calcul, l'ordinateur détermine, pour un instant t au cours duquel une mesure a été faite, la position de chaque arête de coupe et calcule les forces instantanées sur chacune d'elles sur la base de leur engagement dans la matière à cet instant t.

Comme ci-dessus, la table dynamométrique 15 mesure les composantes $F_n$ et $F_t$ de la force subie par l'outil, dans un repère RM. L'ordinateur calcule la résultante $R_{RM}$ puis la transforme, par calcul matriciel, dans un repère BSS en $R_{BSS}$. Pour chacune de ces valeurs, l'ordinateur synchronise les mesures et la position de chacune des arêtes de coupe, grâce au capteur 18. $R_{BSS}$ est ensuite partagée entre chaque dent réellement engagée dans la pièce 12 selon la répartition calculée théoriquement pour l'instant considéré.

Pratiquement, l'ordinateur est équipé d'un logiciel programmé pour effectuer les opérations suivantes :

- acquisition manuelle de la géométrie de l'outil (angle de coupe $\gamma$, nombre d'arêtes de coupe N),
- acquisition manuelle des paramètres d'usinage (vitesse de coupe V, profondeurs axiale et radiale de coupe, avance par dent),
- acquisition des mesures des forces $F_n$ et $F_t$ fournies, en fonction du temps, par la table dynamométrique 15 dans le repère RM centré sur la machine,
- calcul de la résultante $R_{RM}$ à partir des mesures de $F_n$ et $F_t$,
- passage de $R_{RM}$ à $R_{BSS}$, par des calculs matriciels, du repère RM à un repère BSS centré sur l'outil,
- synchronisation de la résultante $R_{BSS}$ calculée avec la position des arêtes de coupe de l'outil,
- calcul des forces théoriques appliquées sur les dents en fonction de leur engagement instantané dans la pièce 12 et détermination de la répartition de ces forces, et
- partage de la résultante $R_{BSS}$ sur les dents en respectant la répartition calculée théoriquement.

Les opérations effectuées ultérieurement sont similaires à celles décrites plus haut, à savoir :

- détermination de l'angle de cisaillement $\Phi$,
- calcul, à partir de la résultante $R_{BSS}$ partagée, des forces de frottement $F_f$ et de cisaillement $F_c$ subies par chacune d'elles,
- calcul, à partir de la vitesse de coupe V, des vitesses de frottement $V_f$ et de cisaillement $V_c$ sur chacune des arêtes de coupe,
- calcul, pour chacune des arêtes, à partir de $F_f$ et de $V_f$, de la puissance de frottement $P_f$ et, à partir de $F_c$ et $V_c$, de la puissance de cisaillement $P_c$ et, éventuellement, de la puissance totale,
- calcul, pour chacune des arêtes, de l'angle de frottement $\beta$ par la formule $F_f = R \sin\beta$, et
- affichage des résultats de ces calculs en fonction du temps.

Ainsi est obtenu un dispositif permettant de mesurer et d'analyser l'évolution des forces subies par un outil de coupe et, plus particulièrement, par chacune des arêtes de coupe que comporte l'outil. Il est donc facile de les comparer à chaque tour de l'outil et de détecter l'apparition d'un problème au cours de l'usinage.

Pour faciliter la compréhension du lecteur, les exemples qui viennent d'être décrits se limitaient à deux dimensions. Mais il est évident que, pour une situation réelle, il faut prendre en compte les trois dimensions de l'espace, la table dynamométrique 15 effectuant les mesures dans les trois directions. Les données à rentrer manuellement dans l'ordinateur 16 sont alors plus nombreuses, particulièrement sur la géométrie de l'outil (angle d'hélice, angle de dépouille...).

La position des arêtes de coupe de l'outil peut être déterminée par tout autre moyen de détection optique, tels que des systèmes de codage, connus dans le milieu des capteurs.

Sur la base des valeurs mesurées et calculées, l'homme de métier pourra simplement programmer le logiciel pour que l'ordinateur lui fournisse d'autres données utiles, par exemple "l'efficience". Cette notion a été introduite pour évaluer facilement l'efficacité de la coupe. Elle est définie comme étant le rapport de la puissance utilisée pour le cisaillement sur la puissance totale. Une efficience de 1 correspond au cas, idéal, dans lequel toute la puissance est utilisée pour le cisaillement sans perte créée par le frottement. Ce paramètre est aussi visualisé.

## Revendications

**1.** Dispositif de surveillance de l'usinage d'une pièce (12) effectué par l'outil (10) d'une machine, doté d'au moins une arête de coupe (11), **caractérisé en ce qu'**il comprend :

- une table dynamométrique (15) sur laquelle est posée ladite pièce (12) et fournissant une mesure des forces ($F_n$, $F_t$) subies par l'outil (10), et
- des moyens pour calculer, à partir des forces mesurées ($F_n$, $F_t$) et de paramètres relatifs à la géométrie de l'outil, la force de frottement ($F_f$) et la force de cisaillement ($F_c$) subies par l'outil.

2. Dispositif selon la revendication 1, **caractérisé en ce que** les moyens pour calculer la force de frottement ($F_f$) et la force de cisaillement ($F_c$) comprennent un ordinateur (16) programmé pour effectuer les opérations suivantes :

- acquisition manuelle de la géométrie de l'outil (10),
- acquisition des mesures des forces ($F_n$, $F_t$) fournies, en fonction du temps, par la table dynamométrique (15) dans un repère (RM) centré sur la machine,
- calcul d'une force résultante ($R_{RM}$) desdites forces ($F_n$, $F_t$),
- conversion de cette résultante ($R_{RM}$) en une deuxième résultante ($R_{BSS}$) dans un repère (BSS) centré sur l'outil, et
- calcul, à partir de cette deuxième résultante ($R_{BSS}$), des forces de frottement ($F_f$) et de cisaillement ($F_c$).

3. Dispositif selon la revendication 1, **caractérisé en ce que** l'outil (10) possède une pluralité d'arêtes de coupe (11) et **en ce qu'**il comporte, en outre, des moyens (18, 20) pour déterminer la position instantanée desdites arêtes.

4. Dispositif selon la revendication 3, **caractérisé en ce que** les moyens pour calculer la force de frottement ($F_f$) et la force de cisaillement ($F_c$) comprennent un ordinateur (16) programmé pour effectuer les opérations suivantes :

- acquisition manuelle de la géométrie de l'outil (10),
- acquisition des mesures des forces ($F_n$, $F_t$) fournies, en fonction du temps, par la table dynamométrique (15) dans un repère (RM) centré sur la machine,
- calcul d'une force résultante ($R_{RM}$) desdites forces ($F_n$, $F_t$),
- conversion de cette résultante ($R_{RM}$) en une deuxième résultante ($R_{BSS}$) dans un repère (BSS) centré sur l'outil,
- synchronisation de la deuxième résultante

($R_{BSS}$) avec la position des arêtes de coupe,
- calcul des forces théoriques appliquées sur les arêtes en fonction de leur engagement instantané dans la pièce et détermination de la répartition de ces forces,
- partage de la deuxième résultante ($R_{BSS}$) sur les arêtes de coupe en respectant la répartition calculée théoriquement, et
- calcul, à partir de la résultante ($R_{BSS}$) partagée sur les arêtes de coupe, des forces de frottement ($F_f$) et de cisaillement ($F_c$) subies par chacune d'elles.

5. Dispositif selon l'une des revendications 2 à 4, **caractérisé en ce que** l'ordinateur (16) est programmé pour calculer, en outre, à partir des forces mesurées ($F_n$, $F_t$) et des paramètres relatifs à la géométrie de l'outil, un angle de frottement ($\beta$).

6. Dispositif selon l'une des revendications 2 à 5, **caractérisé en ce que** l'ordinateur (16) est programmé pour calculer, en outre, à partir des forces mesurées ($F_n$, $F_t$) et de paramètres relatifs à l'usinage, des vitesses de frottement ($V_f$) et de cisaillement ($V_c$).

7. Dispositif selon la revendication 6, **caractérisé en ce que** l'ordinateur (16) est programmé pour calculer, en outre, à partir des forces de frottement ($F_f$) et des vitesses de frottement ($V_f$), la puissance de frottement ($P_f$) dissipée sur une arête de coupe.

8. Dispositif selon la revendication 6, **caractérisé en ce que** l'ordinateur (16) est programmé pour calculer, en outre, à partir des forces de cisaillement ($F_c$) et des vitesses de cisaillement ($V_c$), la puissance de cisaillement ($P_c$) dissipée sur une arête de coupe.

9. Dispositif selon l'une des revendications 1 à 8, **caractérisé en ce que** les résultats des calculs effectués ($F_f$, $F_e$, $V_f$, $V_c$, $P_f$, $P_c$) sont affichés en fonction du temps.

**Claims**

1. Device for supervising the machining of a workpiece (12) performed by the tool (10) of a machine, furnished with at least one cutting edge (11), **characterized in that** it comprises:

- a dynamometric table (15) on which is laid the said workpiece (12) and providing a measurement of the forces ($F_n$, $F_t$) experienced by the tool (10), and
- means for calculating, on the basis of the measured forces ($F_n$, $F_t$) and of parameters relating to the geometry of the tool, the frictional force ($F_f$) and the shearing force ($F_c$) experienced by the tool.

2. Device according to Claim 1, **characterized in that** the means for calculating the frictional force ($F_f$) and the shearing force ($F_c$) comprise a computer (16) programmed to perform the following operations:

- manual acquisition of the geometry of the tool (10),
- acquisition of the measurements of the forces ($F_n$, $F_t$) provided, as a function of time, by the dynamometric table (15) in a reference frame (RM) centred on the machine,
- calculation of a resultant force ($R_{RM}$) of the said forces ($F_n$, $F_t$),
- conversion of this resultant ($R_{RM}$) into a second resultant ($R_{BSS}$) in a reference frame (BSS) centred on the tool, and
- calculation, on the basis of this second resultant ($R_{BSS}$), of the frictional ($F_f$) and shearing ($F_c$) forces.

3. Device according to Claim 1, **characterized in that** the tool (10) possesses a plurality of cutting edges (11) and **in that** it furthermore comprises means (18, 20) for determining the instantaneous position of the said edges.

4. Device according to Claim 3, **characterized in that** the means for calculating the frictional force ($F_f$) and the shearing force ($F_c$) comprise a computer (16) programmed to perform the following operations:

- manual acquisition of the geometry of the tool (10),
- acquisition of the measurements of the forces ($F_n$, $F_t$) provided, as a function of time, by the dynamometric table (15) in a reference frame (RM) centred on the machine,
- calculation of a resultant force ($R_{RM}$) of the said forces ($F_n$, $F_t$),
- conversion of this resultant ($R_{RM}$) into a second resultant ($R_{BSS}$) in a reference frame (BSS) centred on the tool,
- synchronization of the second resultant ($R_{BSS}$) with the position of the cutting edges,
- calculation of the theoretical forces applied to the edges as a function of their instantaneous engagement in the workpiece and determination of the distribution of these forces,
- sharing of the second resultant ($R_{BSS}$) over the cutting edges while complying with the theoretically calculated distribution, and
- calculation, on the basis of the resultant ($R_{BSS}$) shared over the cutting edges, of the frictional ($F_f$) and shearing ($F_c$) forces experienced by each of them.

5. Device according to one of Claims 2 to 4, **characterized in that** the computer (16) is programmed to calculate, furthermore, on the basis of the measured forces ($F_n$, $F_t$) and of the parameters relating to the geometry of the tool, a friction angle ($\beta$).

6. Device according to one of Claims 2 to 5, **characterized in that** the computer (16) is programmed to calculate, furthermore, on the basis of the measured forces ($F_n$, $F_t$) and of parameters relating to the machining, rates of friction ($V_f$) and of shearing ($V_c$).

7. Device according to Claim 6, **characterized in that** the computer (16) is programmed to calculate, furthermore, on the basis of the frictional forces ($F_f$) and of the rates of friction ($V_f$), the frictional power ($P_f$) dissipated over a cutting edge.

8. Device according to Claim 6, **characterized in that** the computer (16) is programmed to calculate, furthermore, on the basis of the shearing forces ($F_c$) and of the rates of shearing ($V_c$), the shearing power ($P_e$) dissipated over a cutting edge.

9. Device according to one of Claims 1 to 8, **characterized in that** the results of the calculations performed ($F_f$, $F_c$, $V_f$, $V_c$, $P_f$, $P_c$) are displayed as a function of time.

**Patentansprüche**

1. Vorrichtung zur Überwachung der Bearbeitung eines Bauteils (12), die durch das Werkzeug (10) einer Maschine durchgeführt wird, das mit mindestens einer Schnittkante (11) versehen ist, **dadurch gekennzeichnet, dass** sie aufweist:

- eine dynamometrischen Tisch (15), auf dem das Bauteil (12) angeordnet ist und der einen Messwert der vom Werkzeug (10) erfahrenen Kräfte ($F_n$, $F_t$) liefert, und
- Mittel, um ausgehend von den gemessenen Kräften ($F_n$, $F_t$) und die Geometrie des Werkzeugs betreffenden Parametern die vom Werkzeug erfahrene Reibungskraft ($F_f$) und Scherkraft ($F_c$) zu berechnen.

2. Vorrichtung nach Anspruch 1, **dadurch gekennzeichnet, dass** die Mittel zur Berechnung der Reibungskraft ($F_f$) und der Scherkraft ($F_c$) einen Rechner (16) aufweisen, der programmiert ist, um die folgenden Vorgänge durchzuführen:

- manuelle Erfassung der Geometrie des Werkzeugs (10),

- Erfassung der Messwerte der Kräfte ($F_n$, $F_t$), die zeitabhängig vom dynamometrischen Tisch (15) geliefert werden, in einem auf die Maschine zentrierten Koordinatensystem (RM),

- Berechnung einer Resultierenden ($R_{RM}$) der Kräfte ($F_n$, $F_t$),

- Umwandlung dieser Resultierenden ($R_{RM}$) in eine zweite Resultierende ($R_{BSS}$) in einem auf das Werkzeug zentrierten Koordinatensystem (BSS), und

- ausgehend von dieser zweiten Resultierenden ($R_{BSS}$), Berechnung der Reibungskräfte ($F_f$) und der Scherkräfte ($F_c$).

3. Vorrichtung nach Anspruch 1, **dadurch gekennzeichnet, dass** das Werkzeug (10) mehrere Schnittkanten (11) besitzt, und dass es außerdem Mittel (18, 20) aufweist, um die augenblickliche Position der Kanten zu bestimmen.

4. Vorrichtung nach Anspruch 3, **dadurch gekennzeichnet, dass** die Mittel zur Berechnung der Reibungskraft ($F_f$) und der Scherkraft ($F_c$) einen Rechner (16) aufweisen, der programmiert ist, um die folgenden Vorgänge durchzuführen:

   - manuelle Erfassung der Geometrie des Werkzeugs (10),
   - Erfassung der Messwerte der Kräfte ($F_n$, $F_t$), die zeitabhängig vom dynamometrischen Tisch (15) geliefert werden, in einem auf die Maschine zentrierten Koordinatensystem (RM),
   - Berechnung einer Resultierenden ($R_{RM}$) der Kräfte ($F_n$, $F_t$),
   - Umwandlung dieser Resultierenden ($P_{RM}$) in eine zweite Resultierende ($R_{BSS}$) in einem auf das Werkzeug zentrierten Koordinatensystem (BSS),
   - Synchronisation der zweiten Resultierenden ($R_{BSS}$) mit der Position der Schnittkanten,
   - Berechnung der auf die Kanten angewendeten theoretischen Kräfte in Abhängigkeit von ihrem augenblicklichen Eingriff in das Bauteil und Bestimmung der Verteilung dieser Kräfte,
   - Aufteilung der zweiten Resultierenden ($R_{BSS}$) auf die Schnittkanten unter Berücksichtigung der theoretisch berechneten Verteilung, und
   - ausgehend von der auf die Schnittkanten aufgeteilten Resultierenden ($R_{BSS}$), Berechnung der Reibungskräfte ($F_f$) und der Scherkräfte ($F_c$), die von jeder von ihnen erfahren werden.

5. Vorrichtung nach einem der Ansprüche 2 bis 4, **dadurch gekennzeichnet, dass** der Rechner (16) programmiert ist, um außerdem ausgehend von den gemessenen Kräften ($F_n$, $F_t$) und von den die Geometrie des Werkzeugs betreffenden Parametern einen Reibungswinkel ($\beta$) zu berechnen.

6. Vorrichtung nach einem der Ansprüche 2 bis 5, **dadurch gekennzeichnet, dass** der Rechner (16) programmiert ist, um außerdem ausgehend von den gemessenen Kräften ($F_n$, $F_t$) und von die Bearbeitung betreffenden Parametern Reibungs- ($V_f$) und Schergeschwindigkeiten ($V_c$) zu berechnen.

7. Vorrichtung nach Anspruch 6, **dadurch gekennzeichnet, dass** der Rechner (16) programmiert ist, um außerdem ausgehend von den Reibungskräften ($F_f$) und den Reibungsgeschwindigkeiten ($V_f$) die auf einer Schnittkante abgeführte Reibungsleistung ($P_f$) zu berechnen.

8. Vorrichtung nach Anspruch 6, **dadurch gekennzeichnet, dass** der Rechner (16) programmiert ist, um außerdem ausgehend von den Scherkräften ($F_c$) und den Schergeschwindigkeiten ($V_c$) die auf einer Schnittkante abgeführte Scherleistung ($P_c$) zu berechnen.

9. Vorrichtung nach einem der Ansprüche 1 bis 8, **dadurch gekennzeichnet, dass** die Ergebnisse der durchgeführten Berechnungen ($F_f$, $F_c$, $V_f$, $V_e$, $P_f$, $P_c$) in Abhängigkeit von der Zeit angezeigt werden.

Fig. 1

Fig. 2

Fig. 3

EP 1 522 384 B1